(19) Europäisches Patentamt
European Patent Office
Office européen des brevets

(11) **EP 3 097 146 B1**

(12) **EUROPEAN PATENT SPECIFICATION**

(45) Date of publication and mention of the grant of the patent:
**25.12.2019 Bulletin 2019/52**

(21) Application number: **14879678.2**

(22) Date of filing: **23.01.2014**

(51) Int Cl.:
***C08J 9/12*** *(2006.01)* ***C08G 18/66*** *(2006.01)*
***B29C 44/10*** *(2006.01)*

(86) International application number:
**PCT/CN2014/071239**

(87) International publication number:
**WO 2015/109488 (30.07.2015 Gazette 2015/30)**

(54) **RIGID POLYURETHANE FOAM HAVING A SMALL CELL SIZE**

POLYURETHANHARTSCHAUM MIT EINER KLEINEN ZELLGRÖSSE

MOUSSE DE POLYURETHANNE RIGIDE POSSEDANT DES ALVEOLES DE PETITE TAILLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.11.2016 Bulletin 2016/48**

(73) Proprietors:
- **Dow Global Technologies LLC**
  **Midland, MI 48674 (US)**
- **Rohm and Haas Company**
  **Philadelphia, PA 19106 (US)**

(72) Inventors:
- **BERTUCELLI, Luigi**
  **I-42124 Reggio Nell'emilia (IT)**
- **PARENTI, Vanni**
  **I-42012 Campagnola Emilia (IT)**
- **LI, Dachao**
  **Shanghai 201203 (CN)**
- **LIU, Wei**
  **Midland, Michigan 48674 (US)**
- **CHAI, Ning**
  **San Ramon, CA 94582 (US)**
- **WANG, Beilei**
  **Midland, MI 48674 (US)**
- **CHEN, Cheng**
  **Midland, MI 48674 (US)**
- **GUO, Hong Fei**
  **Shanghai 201204 (CN)**
- **CHEN, Jing**
  **Midland, MI 48674 (US)**
- **YIN, Yige**
  **Shanghai 200233 (CN)**
- **COSTEUX, Stephane**
  **Midland, Michigan 48640 (US)**
- **SMITH, Billy G.**
  **Midland, MI 48674 (US)**

(74) Representative: **Beck Greener LLP**
**Fulwood House**
**12 Fulwood Place**
**London WC1V 6HR (GB)**

(56) References cited:
**EP-A1- 0 089 796**
**CN-A- 102 719 083**
**DE-A1-102011 050 013**
**US-A1- 2012 245 243**
**US-A1- 2012 245 243**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 097 146 B1

## Description

### Technical Field

The present disclosure relates generally to polyurethane foam and more particularly to rigid polyurethane foam having a small cell size.

### Background

Rigid polyurethane (PU) foam is widely used in appliance and building industries due to its excellent thermal insulation property. Using rigid PU foam with improved thermal insulation performance is one objective for appliance manufacturers. It is known that the thermal conductivity (Lambda, $\lambda$) of rigid PU foam is attributed to at least heat conduction through the gas contained in the rigid PU foam (gas conductivity), conduction through the solid structure of the rigid PU foam (solid conductivity) and from the radiant heat transfer of the rigid PU foam. In conventional rigid PU foams used for appliance, gas conductivity accounts for about 60-70% of the total lambda value. One conventional method to minimize gas conductivity is to use certain types of blowing agents such as hydrochlorofluorocarbons (HCFC, *e.g.,* HCFC141b), hydrofluorocarbons (e.g. HFC245fa), hydrofluoroolefines (HFOs), hydrocarbons (e.g. c-pentane), and mixtures thereof in the production of the rigid PU foams. Some of these gases, however, are known to have ozone depletion potential (ODP) or global warming potential (GWP).

Another approach to minimize gas conductivity is to limit the number of energy exchanging collisions between gas molecules in the cells of the rigid PU foam. Minimizing the number of collisions between gas molecules in the cells can effectively reduce gas conductivity without the use of HCFC, HFC, HFOs or hydrocarbons. To achieve this result the size of the cells of the rigid PU foam needs to be close to or smaller than the mean free path of gas molecules between collisions. This is known as the "Knudsen effect" and can be achieved either by reducing the size of the cells, by reducing the gas pressure inside the cells, or both.

Foaming methods used with rigid PU foams do not, however, readily achieve cell size below about 180 micrometer ($\mu$m). For such foams, strong vacuum needs to be applied (<lmbar, often < 0.1 mbar) to achieve conditions under which the Knudsen effect becomes significant. Thus, there is a need for rigid PU foams having small cells that can achieve low thermal conductivity values (e.g., less than 18 mW/m-K) without the need of very strong vacuum or for the use of gases that have ODP or GWP.

US2012245243 discloses a process for producing a polyurethane foam, in which a blowing agent is present in the supercritical or near-critical state. A reaction mixture is introduced into a closed mould, where the closed mould has been set up in such a way that its interior volume and/or the pressure prevailing in its interior can be altered after the introduction of the mixture by external influence. Through the selection of the surfactant it is said to be possible to obtain microemulsions of the blowing agent in the polyol phase.

DE102011050013 discloses a polyurethane foam obtained by reacting a mixture comprising A) an isocyanate-reactive compound; B) a blowing agent selected from the group comprising linear, branched or cyclic $C_1$ to $C_6$ hydrocarbons, linear, branched or cyclic $C_1$ to $C_6$ fluorohydrocarbons, $N_2$, $O_2$, argon and/or $CO_2$, wherein the blowing agent B) is in the supercritical or near-critical state; and C) a polyisocyanate. The isocyanate-reactive compound A) comprises a hydrophobic part and has a hydrophilic part and an average hydroxyl functionality of more than 1. The hydrophobic part comprises a saturated or unsaturated hydrocarbon chain having at least 6 carbon atoms and the hydrophilic part comprises alkylene oxide units and/or ester units.

### Summary

The present disclosure provides a rigid polyurethane (PU) foam having a cell size small enough to possibly achieve low thermal conductivity values (e.g., lower than 18 mW/m-K and preferably lower than 16 mW/m-K) without the need of a strong vacuum or for the use of gases that could contribute to GWP or VOC. The rigid PU foam is prepared by a method that includes using carbon dioxide ($CO_2$) to provide a pressure at a first predetermined value on a polyol mixture that includes a polyol, a catalyst and a surfactant; maintaining the pressure at the first predetermined value for a first predetermined time; mixing an isocyanate with the polyol mixture to form a polyurethane reaction mixture; optionally maintaining the pressure on the polyurethane reaction mixture at the first predetermined value for a second predetermined time; increasing the pressure on the polyurethane reaction mixture from the first predetermined value to a second predetermined value greater than the first predetermined value; and releasing the polyurethane reaction mixture at a predetermined depressurization rate from the pressure after a third predetermined time to prepare the rigid PU foam, where the third predetermined time is less than 30 minutes.

Maintaining the pressure at the first predetermined value using $CO_2$ for the first predetermined time allows for the $CO_2$ content of the polyol mixture to increase. For example, optionally maintaining the pressure on the polyurethane

reaction mixture at the first predetermined value for the second predetermined time using $CO_2$ increases a carbon dioxide content of the polyurethane reaction mixture to a value of at least 20 weight percent (up to the saturation value) based on the total weight of the polyol mixture after the first predetermined time.

The $CO_2$ used to provide, maintain and/or increase the pressure can include using $CO_2$ in one of a subcritical or a supercritical state, as discussed herein. For example, the first predetermined value of the pressure can be from 5 to 10 MPa at a temperature of 40 °C to 80 °C. Specific combinations of these temperatures and pressures for the $CO_2$ allow the $CO_2$ used in providing and/or in maintaining the pressure at the first predetermined value to be in either a subcritical or a supercritical state. In an additional example, the second predetermined value of the pressure can be from greater than 10 MPa to 15 MPa at a temperature of 40 °C to 80 °C. This combination of temperatures and pressures for the $CO_2$ allow the $CO_2$ used in increasing the pressure on the polyurethane reaction mixture from the first predetermined value to the second predetermined value greater than the first predetermined value to be in a supercritical state.

Each polyol used in the polyol mixture can be selected from the group consisting of a polyether polyol, a polyester polyol or a combination thereof. The isocyanate can be selected from the group consisting of an aliphatic isocyanate, a cycloaliphatic isocyanate, an aromatic isocyanate, a polyisocyanate prepolymer or a combination thereof. Mixing the isocyanate with the polyol mixture to form the polyurethane reaction mixture can provide a molar ratio of isocyanate groups to hydroxyl groups of greater than 1 to 1.

Releasing the polyurethane reaction mixture at the predetermined depressurization rate from the pressure after the third predetermined time to prepare the rigid PU foam can preferably be done at the predetermined depressurization rate of at least 350 MPa/s. Other predetermined depressurization rates are possible (e.g., 350 to 400 MPa/s).

The method of the present disclosure can be performed in a single vessel in a batch process. Alternatively, the method of the present disclosure can be performed in two or more vessels. When two or more vessels are used, the method can be done in a batch, a semi-batch or a continuous process, as discussed herein.

The rigid PU foam produced by the method of the present disclosure can have a number average cell size of no greater than 10 micrometer ($\mu$m).The rigid PU foam of the present disclosure can also have a crosslink density from 1.0 to 3.0 and a weight average molecular weight (Mw) per cross-link from 300 to 900.

## Detailed Description

### Definitions

As used herein "rigid polyurethane (PU) foam" is a PU foam that have an elastic region in which strain is nearly proportional to stress; which when compressed beyond its yield point the cell structure is crushed; where the compressive strength values of 10 to 280 kPa (1.45 - 40.6 psi) can be obtained using rigid PU foams having a density of at least 40 kg/m$^3$. In addition, the elastic modulus, shear strength, flexural strength, and tensile strength all increase with density.

As used herein "number average cell size" "D" is calculated using the following equation:

$$D = \frac{\sum d_i n_i}{\sum n_i}$$

where $n_i$ is the number of cells with a perimeter-equivalent diameter of $d_i$.

The rigid PU foam can be characterized in having a calculated molecular weight between crosslinks. The calculated molecular weight between crosslinks (Mc) takes into account the functionality (number of isocyanate or isocyanate-reactive groups per molecular) and equivalent weight of those polyisocyanate compounds and of those isocyanate-reactive compounds together with the isocyanate index, as follows:

$$\text{Crosslink Density} = 1000/\text{Mc}$$

$$Mc = \frac{Wpol + Wiso}{\frac{Wpol(Fpol-2)}{Epol \times Fpol} + \frac{Wiso,stoich(Fiso-2)}{Eiso \times Fiso} + \frac{Wiso,exc(Fiso-1)}{Eiso(Fiso+1)}}$$

*Wpol* is the weight of the polyol; *Wiso* is the weight of the isocyanate; *Wiso,stoich* is the weight of the stoichiometric amount of isocyanate in grams; *Wiso,exc* is the weight of the isocyanate exceeding the stoichiometric amount; *iso* is isocyanate; *pol* is polyol; *F* is the numerical average functionality of the components; and E is the equivalent weight of

the components.

As used herein, "porosity" is defined as a measure of the void (i.e., "empty") spaces in a material, and is a fraction of the volume of voids over the total volume, between 0-1, or as a percentage between 0-100%. Porosity is determined using ASTM D792-00 or EN ISO 845.

As used herein, carbon dioxide "saturation" is defined as a weight percent of $CO_2$ that has been dissolved in a solution (e.g., the polyol mixture and/or the polyurethane reaction mixture) compared to the saturation equilibrium level, and is measured using a magnetic suspension balance.

As used herein, an "open cell" of the rigid PU foam is defined as the cell which is not completely closed and directly or indirectly interconnecting with other cells, and is measured according to ASTM D2856.

As used herein, a "closed cell" of the rigid PU foam is defined as the cell which is completely closed and non-connecting with any other cells, and is measured according to ASTM D2856.

As used herein, carbon dioxide in a "subcritical state" is defined as carbon dioxide with a pressure of no less than 5 megapascal(MPa) and no larger than the critical pressure of 7.3 MPa for a temperature of at least 0 °C.

As used herein, carbon dioxide in a "supercritical state" is defined as $CO_2$ under a pressure of at least the critical pressure of 7.3 MPa and a temperature of at least the critical temperature of 31.3 °C.

Embodiments of the present disclosure can provide for a rigid polyurethane (PU) foam having a number average cell size of no greater than 10 micrometer ($\mu$m) and a porosity of no less than 85%.Embodiments of the present disclosure can also provide for a method of producing the rigid PU foam having a number average cell size of no greater than 10$\mu$m and a porosity of no less than 85%. The method of producing the rigid PU foam uses carbon dioxide ($CO_2$) as the blowing agent. Unlike certain other blowing agents, such as chlorofluorocarbons, or fluorocarbons,$CO_2$ is an environmentally sustainable physical blowing agent with zero ODP and negligible GWP.

One difficulty in using $CO_2$ as the blowing agent in making the rigid PU foam is the significant influence $CO_2$ can have on PU reaction kinetics. For example, PU foaming methods that use high concentrations of $CO_2$ in a single step foaming operation can slow down the PU reaction such that polymerization and foaming cannot be effectively decoupled. This brings many difficulties in process design and control. It also produces a PU foam having a bi-modal cell size distribution, which is not desirable. The present disclosure provides for a two-stage $CO_2$ pressurization process, as discussed herein, that can provide a rigid PU foam having what could be considered a unimodal cell size distribution. The present disclosure also at least partially decouples the polymerization and foaming processes that allows for the molecular weight of the PU to build before forming the rigid PU foam so that the cell size and porosity of the rigid PU foam can achieve the number average cell size of no greater than 10 $\mu$mand a porosity no less than 85%.

Preferably, the number average cell size of the rigid PU foam of the present disclosure is no greater than 10 $\mu$m, which would enable the Knudsen effect at pressures higher than 1 millibar (mbar), or even higher than 10mbar. Additionally, the method to make the rigid PU foam of the present disclosure preferably uses supercritical carbon dioxide ($scCO_2$) as the blowing agent, which can reduce cost and help protect the environment.

The method of the present disclosure includes a two-stage $CO_2$ pressurization process in forming the rigid PU foam. In the first stage of the two-stage $CO_2$ pressurization process the method includes using $CO_2$ to provide a pressure having a first predetermined value on a polyol mixture. The polyol mixture includes a polyol, a catalyst and a surfactant. The polyol mixture can also include one or more additional compounds, as discussed herein. The $CO_2$ used to provide the pressure having a first predetermined value on a polyol mixture can be in either a subcritical state or a supercritical state. The pressure at the first predetermined value is maintained for a first predetermined time. Maintaining the pressure having the first predetermined value on the polyol mixture can be done with $CO_2$. For example, $CO_2$ can be supplied to a vessel (e.g., pumped into the vessel) containing the polyol mixture in order to maintain the pressure at the first predetermined value. Alternatively, the volume of a head-space containing the $CO_2$ above the polyol mixture can be reduced, thereby maintaining the pressure at the first predetermined value on the polyol mixture. Maintaining the pressure at the first predetermined value for the first predetermined time increases a $CO_2$ content of the polyol mixture.

An isocyanate is mixed with the polyol mixture to form a polyurethane reaction mixture. The pressure on the polyurethane reaction mixture is also optionally maintained at the first predetermined value for a second predetermined time. Maintaining the pressure on the polyurethane reaction mixture at the first predetermined value for the second predetermined time can be done as described above for the first predetermined time. During the second predetermined time, when used, the isocyanate and the polyol mixture in the polyurethane reaction mixture start to react under the $CO_2$ pressure at the first predetermined value.In addition, optionally maintaining the pressure at the first predetermined value for the second predetermined time can increase the $CO_2$ content of the polyurethane reaction mixture to a value of at least 20 weight percent based (up to the saturation value) on the total weight of the polyol mixture after the first predetermined time.

After the second predetermined time (when used), the pressure on the polyurethane reaction mixture is increased from the first predetermined value to a second predetermined value greater than the first predetermined value. The changes in pressure from the first predetermined value to a second predetermined value can be done in a stepwise fashion or in a rate controlled fashion over a predetermined amount of time (e.g., having a ramp or a curve pressure

change profile). Increasing the pressure on the polyurethane reaction mixture from the first predetermined value to the second predetermined value can be done as described above for the first predetermined time. So, for example, $CO_2$ can be supplied to a vessel (e.g., pumped into the vessel) containing the polyurethane reaction mixture in order to increase the pressure from the first predetermined value to the second predetermined value. Alternatively, the volume of a head-space containing the $CO_2$ above the polyurethane reaction mixture can be reduced, thereby increasing the pressure from the first predetermined value to the second predetermined value.

The increase in pressure from the first predetermined value to the second predetermined value starts the second stage of the two-stage $CO_2$ pressurization process. During this second stage of the two-stage $CO_2$ pressurization process the isocyanate continues to react with the polyol mixture in the polyurethane reaction mixture under the $CO_2$ pressurization at the second predetermined value for a third predetermined time, where the third predetermined time is less than 30 minutes. After the third predetermined time the polyurethane reaction mixture is released at a predetermined depressurization rate from the pressure to prepare the rigid PU foam.

Compared with conventional PU foaming process, a one stage (with no second stage of the $CO_2$ pressurization process) supercritical $CO_2$ foaming process can reduce the cell size, but the porosity is less than 80% and the cell size displays a bi-modal distribution. However, by utilizing the two-stage $CO_2$ pressurization process of the present disclosure, rigid PU foams with a number average cell size of no greater than 10 $\mu$m and porosity no less than 85% can successfully be produced. It is also possible, but less preferable, to produce rigid PU foams with number average cell sizes of greater than 10 $\mu$m and/or with a porosity of less than 90%. For example, the rigid PU foam of the present disclosure can be formed with a porosity of no less than 80%. Alternatively, the rigid PU foam of the present disclosure can be formed with a porosity of no less than 70%.

The rigid PU foam formed in the two-stage $CO_2$ pressurization process can also have a crosslink density from 1.0 to 3.0 and a weight average molecular weight (Mw) per cross-link from 300 to 900.In a preferred embodiment, the rigid PU foam of the present disclosure has aMw per cross-link from 400 to 900.In a preferred embodiment, the rigid PU foam of the present disclosure has a crosslink density from 1.15 to 3.0. In another preferred embodiment, the rigid PU foam of the present disclosure has a crosslink density from and 1.5 to 2.5.The crosslink density has been discovered to have a significant influence on the number average cell size of the rigid PU foam. For example, when the crosslink density of the rigid PU foam goes from 2.98 to 1.76 the number average cell size of the rigid PU foam goes from 40 $\mu$m to 5-8 $\mu$m. As such, the number average cell size can be effectively reduced by changing crosslink density of the rigid PU foam.

Preferably, the rigid PU foam formed in this two-stage $CO_2$ pressurization process also has a porosity of no less than85 percent. It is also possible to produce a rigid PU foam formed in the two-stage $CO_2$ pressurization process having a porosity of less than90 percent, if desired. According to some embodiments, the rigid PU foam can have a volume percentage of closed cells of no greater than 35 percent based on all the cells in the rigid PU foam. The rigid PU foam can also have a percentage of open cells that can be tuned from less than 35 percent (%) to greater than 95 % based on all the cells in the rigid PU foam. So, the rigid PU foam of the present disclosure can have an open cell volume of at least 35% based on all the cells in the rigid PU foam. Preferably, the rigid PU foam of the present disclosure can have an open cell volume content from 35% to 95%based on all the cells in the rigid PU foam. These percentage values can be determined using ASTM D2856, as stated above.

The method for preparing the rigid PU foam of the present disclosure can be performed in a batch process using a single vessel. Alternatively, the method for preparing the rigid PU foam of the present disclosure can be performed in two or more vessels using a batch, a semi-batch or a continuous process. For example, in a process that uses a single vessel (e.g., in a batch process) the first stage of the two-stage $CO_2$ pressurization process can include using $CO_2$ to provide a pressure at a first predetermined value on the polyol mixture in the vessel. In this first stage, if a gaseous environment is present above the polyol mixture in the vessel (e.g., a headspace is present)it can be purged with $CO_2$ prior to using the $CO_2$ to provide the pressure at the first predetermined value on the polyol mixture. Purging with $CO_2$ can help to remove water vapor, oxygen and other gases from the headspace of the vessel. The $CO_2$ used to provide the pressure at the first predetermined value on the polyol mixture in the vessel can be in either a subcritical state or a supercritical state, as discussed herein. The pressure at the first predetermined value is maintained inside the vessel, as discussed herein (e.g., using $CO_2$ in either a subcritical state or a supercritical state)for the first predetermined time to increase the $CO_2$ content of the polyol mixture.

The amount of $CO_2$ dissolved into the polyol mixture is calculated by modeling and it is used to estimate the required time to obtain a certain degree of $CO_2$ saturation in the polyol mixture for given temperature and pressure conditions. In other words, the $CO_2$ dissolved into the polyol of the polyol mixture can be estimated from modeling software, which in turn can provide estimates for the required time at a given temperature and pressure of $CO_2$ to obtain the desired degree of $CO_2$ saturation in the polyol mixture. The exact amount of time for the first predetermined time can depend upon the specific equipment used and is strongly dependent on the contact area between the liquid phase of the polyol mixture and the phase of the $CO_2$ and the mixing equipment, if any, that is used. Preferably, the first predetermined time is keep to a minimum in order to improve production rates. For example, the first predetermined

time can preferably be from 30 seconds (s) to 300s.It is appreciated, however, that values for the first predetermined time can be shorter than 30 s or longer than 300 s. For example, it might be possible to hold the polyol mixture under the pressure at the first predetermined value for hours or even days, if desired, without any foreseeable issues to the method for preparing the rigid PU foam.

One goal in providing the pressure at the first predetermined value is to dissolve $CO_2$ into the polyol mixture. Dissolving $CO_2$ in the polyol mixture helps to modify the reaction kinetics of the polyurethane reaction once the isocyanate is added to the polyol mixture. Preferably, the amount of $CO_2$ present in the polyol mixture is at full saturation for the given temperature and pressure. In this way, a polyol mixture that has a saturated amount of $CO_2$ can be formed and stored for mixing with the isocyanate, as discussed herein. Preferably, optionally maintaining the pressure at the first predetermined value for the second predetermined time can increase a $CO_2$ content of the polyurethane reaction mixture to a value of at least 20 weight percent based on the total weight of the polyol mixture after the first predetermined time.

The temperature and the pressure of the polyol mixture and of the $CO_2$ to provide the pressure at the first predetermined value on the polyol mixture and for maintaining the pressure at the first predetermined value for the first predetermined time (the first stage of the two-stage $CO_2$ pressurization process)is sufficient to maintain the $CO_2$ in either a subcritical state or a supercritical state. For example, the first predetermined value can be from 5 megapascal (MPa) to 10 MPa at a temperature of 40 degrees Celsius (°C) to 80 °C. This range of pressures and temperatures allows for $CO_2$ in either the subcritical state or the supercritical state. For example, for temperatures of 40 degrees °C to 80 °C the $CO_2$ will be in a supercritical state for the first predetermined value for the pressures of at least 7.29 MPa to 10 MPa. For temperatures of 40°C to 80 °C the $CO_2$ will be in a subcritical state for the first predetermined value for the pressures of 5 MPa to less than 7.29 MPa. Preferably, the $CO_2$ used to provide the pressure at the first predetermined value is in a supercritical state. In addition to these preferred pressures and temperatures for the $CO_2$ it is also possible that the $CO_2$ used to provide the pressure at the first predetermined value can have a temperature in a range from at least 31.1°C to 100 °C. For this temperature range (31.1 °C to 100 °C), the $CO_2$ will be in a supercritical state at a first predetermined value for the pressure of at least 7.29 MPa.

The temperature of the polyol mixture at the first stage of the two-stage $CO_2$ pressurization process can influence the reaction rate of the polyol and the isocyanate in the polyurethane reaction mixture during the second stage of the two-stage $CO_2$ pressurization process. If the temperature of the polyol mixture during the first stage is too high, the polyol mixture will have to be cooled prior to it being mixed with the isocyanate in order to manage the reaction kinetics. Cooling the polyol mixture prior to adding the isocyanate is possible, but would shift the polyol-$CO_2$equilibrium established during the first stage of the method and it would add significant additional complexity. It is thus preferred to carry out the first stage of the two-stage $CO_2$ pressurization process at a temperature lower than or equal to that of the second stage of the two-stage $CO_2$ pressurization process.

As discussed herein, using carbon dioxide to provide a pressure at the first predetermined value on the polyol mixture during the first stage of the two-stage $CO_2$ pressurization process helps to build up the initial $CO_2$ concentration in the polyol mixture. The $CO_2$ concentration in the polyol mixture in turn helps to slow down (or decrease) the reaction rate of the polyol and the isocyanate, so that in the second stage of the two-stage $CO_2$ pressurization process there will be enough time for more $CO_2$ to dissolve into the polyurethane reaction mixture. The choice of the second predetermined value for the pressure of $CO_2$ in the second stage of the two-stage $CO_2$ pressurization process can be influenced by such factors as: the state of the $CO_2$ (supercritical or subcritical); the density difference between the polyol mixture and $CO_2$ phase (for mixing); and the initial $CO_2$ concentration in the polyol mixture and corresponding reaction rate of the polyol and the isocyanate. Using these principles, it has been determined that the $CO_2$ used to increase the pressure on the polyurethane reaction mixture from the first predetermined value to the second predetermined value greater than the first predetermined value (the second stage of the two-stage $CO_2$ pressurization process)should be in a supercritical state. As discussed herein, $CO_2$ is in a supercritical state at a temperature of at least 31.1 °C and a pressure of at least 7.29 MPa. Preferably, the second predetermined value for the pressure of the $CO_2$ is from greater than 10 MPa to 15 MPa at a temperature of 31°C to 80 °C.

The density difference between the polyol in the polyol mixture and the $CO_2$ in the reactor during either the first stage or the second stage of the two-stage $CO_2$ pressurization process is also taken into consideration in selecting the temperature of the polyol mixture and the temperature and pressure of the $CO_2$ used during these two stages. For example, one goal during these stages is to minimize the dissolution of polyol into the $CO_2$. The preferred state consists of a large amount of $CO_2$ dissolved in the polyol mixture and very little or no polyol dissolved in the $CO_2$. Dissolution of the polyol into the $CO_2$ becomes easier as the density of the $CO_2$ increases and approaches the density of the polyol mixture. The density of $CO_2$ increases with increasing pressure for a set temperature. Consequently the pressure of the $CO_2$ should be set as high as possible (large driving force for polyol saturation), but low enough to maintain a sufficient barrier to polyol dissolution into the $CO_2$. Because of the change in density value for $CO_2$ with pressure above a certain point (dependent on temperature), it is further preferred that the first predetermined value for the pressure should not be higher than 8 MPa at 40 °C, not higher than 8.9 MPa at 50 °C and not higher than 9.8 MPa at 60 °C. In short, considering the factors listed above, the most preferable first predetermined value would be from 7 MPa to 8 MPa at a

temperature of 40 °C to 80 °C.

As discussed herein, the isocyanate is mixed with the polyol mixture to form the polyurethane reaction mixture. For the various embodiments, mixing the isocyanate with the polyol mixture to form the polyurethane reaction mixture in the vessel at the first reaction pressure provides a molar ratio of isocyanate groups to hydroxyl groups of greater than 1 to 1. For example, mixing the isocyanate with the polyol mixture to form the polyurethane reaction mixture in the vessel at the first reaction pressure can provide a molar ratio of isocyanate groups to hydroxyl groups of greater than 1 to 5.

For the present disclosure, a mixing time of 90 seconds is sufficient to achieve adequate mixing of the polyol mixture and the isocyanate. The first reaction pressure of $CO_2$ is maintained in the vessel during the mixing of the isocyanate. The first reaction pressure of the $CO_2$ in the vessel containing the isocyanate and the polyol mixture is optionally maintained for a second predetermined time during which the isocyanate and the polyol mixture can react under the first stage $CO_2$ pressure. The second predetermined time allows for reaction between the polyol and isocyanate components to increase the molecular weight of the mixture, the degree of crosslinking in the growing polymer network of the polyurethane reaction mixture and to build viscosity of the polyurethane reaction mixture. The second predetermined time also helps to prevent the dissolution of the polyurethane reaction mixture (e.g., polymer, isocyanate, polyol) into the $CO_2$ phase during the next processing step. Preferably, the second predetermined time is from 30 to 300 seconds.

After the second predetermined time (if used), the pressure in the vessel is increased, as discussed herein, from the first reaction pressure to a second reaction pressure greater than the first reaction pressure. This second reaction pressure helps to determine the density of the rigid PU foam and can be adjusted to achieve the desired density. A lower pressure at this stage will result in a rigid PU foam with higher density (e.g.,350 kg/m3) and a higher pressure in a foam with a lower density (e.g.,110 kg/$m^3$).

The isocyanate reacts with the polyol mixture in the vessel at the second reaction pressure for a third predetermined time. The third predetermined time needs to be long enough to allow for the required amount of $CO_2$ to dissolve into the polyurethane reaction mixture to achieve the desired final foam density. Similar to what was discussed for the first step, the length of the third predetermined time can depend on the mixing conditions, contact area between phases, density and viscosity differences and the pressure in the reactor. The third predetermined time needs to be long enough so that the system builds up sufficiently high viscosity/crosslinking to give the desired cell size during the pressure release step. The third predetermined time should be short enough to prevent the reacting mixture from reaching too high a viscosity and cross-link density that expansion during the depressurization step does not lead the desired density. Preferably, the third predetermined time is less than 30 minutes, and more preferably less than 780 seconds.

After the third predetermined time, the polyurethane reaction mixture at the second reaction pressure in the vessel is released at a predetermined depressurization rate to form the rigid PU foam. The predetermined depressurization rate determines the nucleation energy barrier and number of initial nucleation sites in forming polymer matrix of the rigid PU foam. The higher depressurization rate is the lower energy barrier will be and the more nucleation sites there will be. It is preferable to achieve as high depressurization rate as possible to promote the nucleation and produce smaller cell size and higher porosity. Preferably, releasing the polyurethane reaction mixture at the predetermined depressurization rate from the pressure after the third predetermined time to prepare the rigid polyurethane foam is done at a rate of at least 350 MPa/s. These predetermined depressurization rates have been discovered to produce the rigid PU foam of the present disclosure with a number average cell size of no greater than 10 μm and porosity of no less than 85 %.

Releasing the polyurethane reaction mixture at the predetermined depressurization rate (foam expansion) can be controlled through the number of release valves in the system. The polyurethane reaction mixture can be depressurized inside a pressure vessel or could be injected into a cavity through an injection nozzle. For the various embodiments, the polyurethane reaction mixture can be released into standard atmospheric pressure (101.3 MPa). Alternatively, the polyurethane reaction mixture can be released into a pressure different from standard atmospheric pressure. For example, the polyurethane reaction mixture can be released into a pressure that is less than atmospheric pressure (e.g., into a vacuum) or into a pressure that is greater than atmospheric pressure. It is also possible that the rigid PU foam can undergo a post foam evacuation process (e.g., applying a vacuum to the rigid PU foam) in order to obtain a lower thermal conductivity for the rigid PU foam.

Polyol

The polyol of the present disclosure can be selected from the group consisting of a polyether polyol, a polyester polyol or a combination thereof. The polyol of the present disclosure can also include two or more of the polyether polyol, the polyester polyol or a combination thereof. The polyol of the present disclosure include compounds which contain two or more isocyanate reactive groups, generally active-hydrogen groups, such as primary and/or secondary hydroxyl groups (-OH). Other suitable isocyanate reactive groups include primary or secondary amines, and -SH.

The polyol(s) used in the polyol mixture may each have a functionality of at least 2 with an upper limit of 8. As used herein, the polyol functionality of the polyol is not an average value, but a discrete value for each polyether polyol. In addition, each polyol in the polyol mixture can have a hydroxyl number of 50mg KOH/g to 1200 mg KOH/g. In a further

embodiment, each polyol in the polyol mixture can have a hydroxyl number of 100 mg KOH/g to 800 mg KOH/g. So, the polyol mixture has a number averaged functionality of at least 2, preferably from 3 to 5, and an average hydroxyl value of at least 100 mg KOH/g. The hydroxyl number gives the hydroxyl content of a polyol, and is derived from method of analysis by acetylating the hydroxyl and titrating the resultant acid against KOH. The hydroxyl number is the weight of KOH in milligrams that will neutralize the acid from 1 gram of polyol. The equivalent weight of KOH is 56.1, hence:

$$\text{Hydroxyl Number} = (56.1 \times 1000) / \text{Equivalent Weight}$$

where 1000 is the number of milligrams in one gram of sample.

Examples of polyether polyols include the following commercially available compositions sold under the trade designator VORANOL™ RN482 (The Dow Chemical Company), VORANOL™ CP260 (The Dow Chemical Company), VORANOL™ RA640 (The Dow Chemical Company), TERCAROL® 5903 (The Dow Chemical Company), VORATEC™SD 301 (The Dow Chemical Company).

Other useful polyether polyols include those obtained by the alkoxylation of suitable starting molecules with an alkylene oxide, such as ethylene, propylene, butylene oxide, or a mixture thereof. Examples of initiator molecules include water, ammonia, aniline or polyhydric alcohols such as dihydric alcohols and alkane polyols such as ethylene glycol, propylene glycol, hexamethylene diol, glycerol, trimethylol propane or trimethylol ethane, or the low molecular weight alcohols containing ether groups such as diethylene glycol, dipropylene glycol or tripropylene glycol. Other initiators include pentaerythritol, xylitol, arabitol, sorbitol, sucrose, mannitol, bisphenol A and the like. Other initiators include linear and cyclic amine compounds which may also contain a tertiary amine, such as ethanoldiamine, triethanolamine, and various isomers of toluene diamine, methyldiphenylamine, aminoethylpiperazine, ethylenediamine, N-methyl-1,2-ethanediamine, N-methyl-1,3-propanediamine, $N_5$N-dimethyl-1,3-diaminopropane, N,N-dimethylethanolamine, 3,3-diamino-N-methylpropylamine, N,N-dimethyldipropylenetriamine, aminopropyl-imidazole and mixtures thereof.

As provided herein, the polyether polyol can be a sucrose-initiated or a sorbitol-initiated polyether polyol. For example, the polyether polyol can be selected from the group consisting of a sucrose/glycerine-initiated polyether polyol, a sorbitol propoxylated polyol or a combination thereof. Sucrose may be obtained from sugar cane or sugar beets, honey, sorghum, sugar maple, fruit, and the like. Means of extraction, separation, and preparation of the sucrose component vary depending upon the source, but are known and practiced on a commercial scale by those skilled in the art. Sorbitol may be obtained via the hydrogenation of D-glucose over a suitable hydrogenation catalyst. Fixed beds and similar types of equipment are especially useful for this reaction. Suitable catalysts may include, for example, Raney™ (Grace-Davison) catalysts, such as employed in Wen, Jian-Ping, et. al., "Preparation of sorbitol from D- glucose hydrogenation in gas-liquid-solid three-phase flow airlift loop reactor," The Journal of Chemical Technology and Biotechnology, vol. 4, pp. 403-406 (Wiley Interscience, 2004), incorporated herein by reference in its entirety. Nickel-aluminum and ruthenium-carbon catalysts are just two of the many possible catalysts.

The polyol mixture can also include apolyester polyol, which is obtained by the condensation of appropriate proportions of glycols and higher functionality polyols with polycarboxylic acids. Examples of dicarboxylic acids are succinic acid, glutaric acid, adipic acid, suberic acid, azelaic acid, sebacic acid, decanedicarboxylic acid, malonic acid, dodecanedicarboxylic acid, maleic acid, aromatic dicarboxylic acids, and the like. Examples of dihydric and polyhydric alcohols include ethanediol, diethylene glycol, triethylene glycol, 1,2-and 1,3-propanediol, dipropylene glycol, 1,4-butanediol and other butanediols, 1,5-pentanediol and other pentanediols, and the like. A specific example of a polyester polyol is STEPANPOL® 3152, which is based on phtalic anhydride.

The polyol mixture of the present disclosure can include 50 weight percent (wt. %) to 99wt. % of polyol, where the wt. % is based on a total weight of the polyol mixture. Combinations of more than one of each type of polyol (e.g., polyether polyol and polyester polyol) as discussed herein may also be selected, provided their combined percentages in the polyol mixture as a whole comply with the stated ranges.

Catalyst

The catalyst of the present disclosure can be selected from the group consisting of tertiary amines, tin and bismuth compounds, alkali metal and alkaline earth metal carboxylates, quaternary ammonium salts, s-hexahydrotriazines and tris(dialkylaminomethyl) phenols or a combination thereof. Examples of such catalysts include, but are not limited to, trimethylamine; triethylamine; dimethylethanolamine; N-methylmorpholine; N-ethylmorpholine; N,N-dimethylbenzylamine; N,N-dimethylethanolamine; N,N,N',N'-tetramethyl-1,4-butanediamine; N,N-dimethylpiperazine; 1,4-diazobicyclo-2,2,2-octane; bis(dimethylaminoethyl)ether; bis(2-dimethylaminoethyl) ether; morpholine,4,4'-(oxydi-2,1-ethanediyl)bis; triethylenediamine; pentamethyl diethylene triamine; dimethyl cyclohexyl amine; N-acetyl N,N-dimethyl amine; N-coco-morpholine; N,N-dimethyl aminomethyl N-methyl ethanol amine; N, N, N'-trimethyl-N'-hydroxyethyl bis(aminoethyl) ether; N,N-bis(3-dimethylaminopropyl)N-isopropanolamine; N,N,N,N,N-Pentanmethyldiethylenetriamine; N,N-

Dimethylcyclohexylamine; diethylene glycol, potassium acetate; Dimethylaminopropyl-hexahydrotriazine,N,N',N"; (N,N-dimethyl) amino-ethoxy ethanol; N,N,N',N'-tetramethyl hexane diamine; 1,8-diazabicyclo-5,4,0-undecene-7, N,N-dimorpholinodiethyl ether; N-methyl imidazole; dimethyl aminopropyl dipropanolamine; bis(dimethylaminopropyl)amino-2-propanol; tetramethylamino bis (propylamine); (dimethyl(aminoethoxyethyl))((dimethyl amine)ethyl)ether; tris(dimethylamino propyl) amine; dicyclohexyl methyl amine; bis(N,N-dimethyl-3-aminopropyl) amine; 1,2-ethylene piperidine and methyl-hydroxyethyl piperazine.In addition to or instead of the tertiary amine catalyst mentioned before. Of particular interest among these are tin carboxylates and tetravalent tin compounds. Examples of these include stannous octoate, dibutyl tin diacetate, dibutyl tin dilaurate, dibutyl tin dimercaptide, dialkyl tin dialkylmercapto acids, dibutyl tin oxide, dimethyl tin dimercaptide, dimethyl tin diisooctylmercaptoacetate, and the like.

The polyol mixture of the present disclosure can include 0.003 weight percent (wt. %) to 10 wt. % of the catalyst, where the wt. % is based on a total weight of the polyol mixture. Combinations of more than one of each type of catalyst as discussed herein may also be selected, provided their combined percentages in the polyol mixture as a whole comply with the stated ranges.

It is also possible that the catalyst could take the form of a self-catalytic polyol, as are known.

Surfactant

Surfactants in conventional polyurethane foaming processes help to decrease the interfacial tension and improve the compatibility of the raw materials, improve the formation and stability of nucleation sites, and help to improve the stability of the growing cells of the expanding foam. For the present disclosure, the surfactant is also chosen to help in stabilizing the interface between the $CO_2$ and the polyol during the two-stage foaming process of the present disclosure. Helping to stabilize the $CO_2$ and polyol interface with the surfactant helps to decrease the collapse and coalescence of formed bubble during the depressurization step (the foaming step) of the present disclosure.

Based on studies of stabilization times for bubbles formed from $CO_2$ and polyol, specific silicone based surfactants have been identified as being preferred for the polyol mixture. These silicone based surfactants are characterized by two kinds of functional chains. One functional chain contains siloxane structure which is compatible with $CO_2$. The other functional chain contains ethoxy or propoxy structure which is compatible with polyol. Specific examples of such silicone based surfactants include those sold by Momentive™ under the trade designator Niax Silicone L-6187, Niax Silicone L-6840, Niax Silicone L-6863, Niax Silicone L-6887, all of which provided stabilization times for bubbles formed from $CO_2$ and polyol from 1 hour to about 5 hours at room temperature (23 °C) and standard atmospheric pressure (101.3 KPa). Another specific and preferred example of a silicone based surfactant is sold by Maysta™ under the trade designator AK8850, which provided stabilization times for bubbles formed from $CO_2$ and polyol for greater than 7 hours at room temperature (23 °C) and standard atmospheric pressure (101.3 MPa).

It is also possible to control the percentage of open-cell versus closed-cell in the rigid PU foam through the use of cell-opening surfactants with the silicone based surfactants. Examples of such cell-opening surfactants include, but are not limited to those sold by Dupont™ and Maysta™ under the trade designator GPL-105, GPL-100, AK-9903 and those sold by Momentive™ under the trade designator Niax Silicone L-6164.

The polyol mixture of the present disclosure can include 0.5 weight percent (wt. %) to 15wt. % of surfactant, where the wt. %is based on a total weight of the polyol mixture. Combinations of more than one of each type of surfactant as discussed herein may also be selected, provided their combined percentages in the polyol mixture as a whole comply with the stated ranges.

Determining the percentage of open cell is done using ASTM-D2856

Isocyanate

In order to prepare the rigid PU foam, react the polyol mixture with the isocyanate in the presence of a blowing agent using the two-stage foaming process of the present disclosure. Preferably the isocyanate is selected from the group consisting of an aliphatic isocyanate, a cycloaliphatic isocyanate, an aromatic isocyanate, a polyisocyanate prepolymer or a combination thereof. These may further include multifunctional aromatic isocyanates. Also particularly preferred are polyphenyl polymethylene polyisocyanates (PMDI).For example, isocyanate can be a polymeric methylene diphenyl diisocyanate. The polymeric form of MDI(p-MDI or PMDI) is typically 30 percent to 70 percent diphenylmethanediisocyanate, and the balance is highermolecular-weight fractions. Examples of preferred commercially available isocyanates include, those sold under the trade designator PAPI™ 27 and PAPI™ 135Cboth from The Dow Chemical Company. Other isocyanates useful in the present disclosure include tolylene diisocyanate (TDI), isophorone diisocyanate (IPDI) and xylene diisocyanates (XDI), and modifications thereof. These isocyanates may be used in combinations of two or more types.

PMDI in any of its forms is a preferred isocyanate for use with the present disclosure. When used, it preferably has an equivalent weight of 120 to 150, more preferably from 125 to 145. The isocyanate can have a functionality from

2.1 to 3. As used herein, the functionality of the isocyanate is the number of isocyanate groups [-N=C=O] present per molecule of isocyanate. The viscosity of the isocyanate component is preferably from 25 to 5,000 centipoise (cP) (0.025 to about 5 Pa*s), but values from 100 to 1,000 cP at 25°C (0.1 to 1 Pa*s) are possible. Similar viscosities are preferred where alternative isocyanate components are selected.

The total amount of isocyanate used to prepare the rigid PU foam of the present disclosure should be sufficient to provide an isocyanate reaction index of from 0.6 to 5. Preferably the index is from 0.6 to 1.5. More preferably the index is from 0.7 to 1.2. An isocyanate reaction index of 100 corresponds to one isocyanate group per isocyanate reactive hydrogen atom present, such as from water and the polyol composition. For the mixing of the isocyanate with the polyol mixture in the vessel at the first reaction pressure the amount of isocyanate added to the vessel is sufficient to preferably provide a molar ratio of isocyanate groups to hydroxyl groups of greater than 1 to 5..

Blowing Agent

As discussed herein, the primary blowing agent used in the present disclosure is $CO_2$ that is introduced into the polyol mixture during the first and second stages of the two-stage foaming process of the present disclosure. Use of additional blowing agents is possible, but not a preferred embodiment.

The rigid PU foam of the present disclosure can be produced using the polyol mixture, the isocyanate and the two-stage foaming process as discussed herein. Batch, semi-continuous and continuous processes may be used in performing the two-stage foaming process as discussed herein. For example, for a semi-continuous process the polyol mixture can be loaded and sealed into a high pressure vessel. A high pressure mixer (e.g., a static mixer) is coupled to the high pressure vessel, and the high pressure mixer has an opening the size of which can be controlled to control the depressurization rate of the polyurethane reaction mixture emerging from the high pressure mixer.

For this example process, supercritical or subcritical $CO_2$ is injected into a high pressure vessel to provide a pressure at the first predetermined value on the polyol mixture. The pressure of the $CO_2$ at the first predetermined value is maintained in the vessel for the first predetermined time to increase a $CO_2$ concentration in the polyol mixture. A first amount of the polyol mixture is then pumped through a high pressure mixer (e.g., a static mixer) to preload the high pressure mixer and to maintain proper backpressure in the mixer. Afterward, polyol mixture and isocyanate are pumped at the desired flow-rate, pressure and temperature, to a high-pressure mixer. Further injection of $CO_2$ may be provided to set the pressure at a second predetermined value higher than the first predetermined value (and lower than the pressure in the delivery line of the pumps). The isocyanate reacts with the polyol mixture in the high pressure mixer for the third predetermined time(pump rates are set so that to obtain appropriate residence time). The polyurethane reaction mixture can then be released through the orifice at the predetermined depressurization rate.

Another example process, suitable for discontinuous production, involves the preparation in a high pressure vessel of a polyol mixture loaded with $CO_2$ at a first predetermined pressure for a first predetermined time, the supply by means of high pressure pumps of said polyol mixture containing $CO_2$ and of isocyanate to a mixing/dispensing apparatus comprising three chambers, a mixing chamber, a pre-curing chamber and a discharge chamber. In a preferred set-up the chambers are all provided with a piston and are constructed each orthogonal to the other. In the first chamber, the mixing chamber, the polyol mixture and the isocyanate are mixed by means of high pressure impingement. The reaction mixture runs to the pre-curing chamber. The piston of the pre-curing chamber is actuated in such a way to provide the required volume at controlled pressure during the transfer of the reaction mixture. Once all of the required reaction mixture has been transferred, the piston of the mixing chamber closes. Injection of additional $CO_2$ can take place during the transfer from the mixing chamber or alternatively in the pre-curing chamber. Optionally, the reaction mixture can be held for a second predetermined time, then pressure is increased to a second predetermined value and maintained for a third predetermined time. Once the reaction mixture in the pre-curing chamber is ready for being poured and/or injected, the piston of the discharge chamber opens. Proper synchronization of the pistons in the pre-curing chamber and the discharge chamber allows control of depressurization rate. The apparatus may advantageously be designed to allow self-cleaning at the end of pouring.

The rigid PU foam can be formed into a number of different shapes and on to or in to a number of different structures. For example, such structures can include, but are not limited to, rigid or flexible facing sheet made of foil or another material, including another layer of similar or dissimilar PU or polyisocyanurate which is being conveyed, continuously or discontinuously, along a production line, or directly onto a conveyor belt. In alternative embodiments the composition for forming the rigid PU foam may be injected into an open mold or distributed via lay down equipment into an open mold or simply deposited at or into a location for which it is destined, i.e., a pour-in-place application, such as between the interior and exterior walls of a mold. In the case of deposition on a facing sheet, a second sheet may be applied on top of the deposited mixture. In other embodiments, the composition for forming the rigid PU foam may be injected into a closed mold, with or without vacuum assistance for cavity- filling. If a mold is employed, it can be a heated mold.

The mixture, on reacting, takes the shape of the mold or adheres to the substrate to produce the rigid PU foam

of a more-or-less predefined structure, which is then allowed to cure in place or in the mold, either partially or fully. Suitable conditions for promoting the curing of the composition of the present disclosure include a temperature of typically from 40°C to 80°C, preferably from 40°C to 60°C, and more preferably from 40°C to 50°C. Optimum cure conditions will depend upon the particular components, including catalysts and quantities used in preparing the composition for forming the rigid PU foam and also the size and shape of the article manufactured.

The result can be the rigid PU foam in the form of slabstock, a molding, a filled cavity, including but not limited to a pipe or insulated wall or hull structure, a sprayed foam, a frothed foam, or a continuously- or discontinuously-manufactured laminate product, including but not limited to a laminate or laminated product formed with other materials, such as hardboard, plasterboard, plastics, paper, metal, or a combination thereof. The rigid PU foam of the present disclosure can be used to form an insulation panel, where the insulation panel optionally includes a rigid or flexible facing sheet as discussed herein.

The composition for forming the rigid PU foam of the present disclosure can also include other optional additives. Such additives include, but are not limited to, phosphorous type flame retardants, chain extenders, silicone surfactants, physical blowing agents and water, chain extenders, oil, antioxidants, mold release agents, UV stabilizers, antistatic agents, antimicrobials, flow aids, processing aids, nucleating agents, , , pigments, fillers or a combination thereof. Examples of such phosphorous fire retardants include, but are not limited to, phosphates and halogen-phosphates such as triethyl phosphate (TEP) and tris(chloropropyl) phosphate (TCPP), among others.

The description hereinabove is intended to be general and is not intended to be inclusive of all possible embodiments of the disclosure. Similarly, the examples herein below are provided to be illustrative only and are not intended to define or limit the disclosure in any way. Those skilled in the art will be fully aware that other embodiments, within the scope of the claims, will be apparent, from consideration of the specification and/or practice of the disclosure as disclosed herein. Such other embodiments may include selections of specific components and proportions thereof; mixing and reaction conditions, vessels, deployment apparatuses, and protocols; performance and selectivity; identification of products and by-products; subsequent processing and use thereof; and the like; and those skilled in the art will recognize that such may be varied within the scope of the claims appended hereto.

## EXAMPLES

Materials

Table 1 -Materials for Examples and Comparative Examples

| Component | | Characteristic | Supplier |
|---|---|---|---|
| Polyol | VORANOL™ RN482 (RN482) | F=6; OH n° 482, PO based | The Dow Chemical Company (TDCC) |
| Polyol | VORANOL™ RA640 (RN 640) | F=4; OH n° 640, PO based | TDCC |
| Polyol | TERCAROL 5903 (T 5903) | F=4; OH n° 440, PO based | TDCC |
| Polyol | VORATEC™ SD301 (SD301) | F=3; OH n° 160, PO based | TDCC |
| Polyol | VORANOL™ CP260 (CP 260) | F=3, OH n° 650, PO based | TDCC |
| Polyol | SPECFLEX NC 700 | Copolymer polyol. F=3, OH n° 23, Sty andAcrylonitrile based | TDCC |
| Polyol | STEP ANPOL® PS-3152 (PS-3152) | F=2, OH n° 315 | Stepan Company |
| Polyol | VORANOL™ RH 360 (RH 360) | F=4.9, OH n° 360, PO based | TDCC |
| Polyol | VORANOL™C P 450 (CP 450) | F=3, OH n° 370, PO based | TDCC |

(continued)

| Component | | Characteristic | Supplier |
|---|---|---|---|
| Catalyst | POLYCAT® -5 (PC-5) | N,N,N,N,N-Pentamethyldiethylenetriamine | Air product |
| Catalyst | POLYCAT® -8 (PC-8) | N,N- Dimethylcyclohexylamine | Air product |
| Catalyst | CURITHANE® -206 (C-206) | Diethylene glycol, Potassium acetate | TDCC |
| Catalyst | POLYCAT® -41 (PC-41) | Dimethylaminopropyl-hexahydrotriazine,N, N',N" | Air product |
| Surfactant | AK8850 | Silicone surfactant | Dearmate |
| Surfactant | L6164 | Silicone surfactant | Momentive |
| Cell opener | R-501 | Silicone surfactant | Dearmate |
| Cell opener | AK9903 | Silicone surfactant | Dearmate |
| Isocyanate | Papi-27 | PMDI | TDCC |
| Isocyanate | Papi-135C | PMDI | TDCC |
| Carbon Dioxide | | | Air product |
| F - Functionality; OH n° - hydroxyl number | | | |

Table 2 - Formulation for Examples 1 through 4 and Comparative Example A

| Components in parts by weight | | Example 1 | Example 2 | Example 3 | Comparative Example A | Example 4 |
|---|---|---|---|---|---|---|
| Polyol, | RN482 | 64.98 | 64.98 | 64.98 | 0 | 0 |
| Polyol, | RA640 | 5.09 | 5.09 | 5.09 | 0 | 0 |
| Polyol, | SD301 | 25.45 | 25.45 | 25.45 | 95.15 | 66.6 |
| Polyol, | CP260 | 0 | 0 | 0 | 0 | 28.54 |
| Surfactant, | AK8850 | 2.04 | 2.04 | 2.04 | 1.9 | 1.9 |
| Catalyst, | PC-41 | 0.61 | 0.61 | 0.61 | 0.57 | 0.57 |
| Catalyst, | PC-5 | 0.41 | 0.41 | 0.41 | 0.48 | 0.48 |
| Catalyst, | PC-8 | 1.43 | 1.43 | 1.43 | 1.9 | 1.9 |
| Isocyanate, Index = 1.15 | Papi-27 | 107 | 107 | 107 | 42.1 | 80.8 |
| Mw per crosslink | | 337 | 337 | 337 | 873 | 566 |
| Crosslink Density (1000/Dalton) | | 2.97 | 2.97 | 2.97 | 1.15 | 1.77 |
| Reaction Time at Depressurization | | 8minutes (min) 15 second (sec) | 9 min | 12 min | 30 min | 10 min 10 sec |
| Number average Cell Size(micron) | | 60 | 40 | 70 | NA* | 8 |
| Mass Density(kg/$m^3$) | | 259 | 342 | 327 | NA* | 326 |
| *Example 1 foam is not suitable to take measurements. | | | | | | |

Foaming Process

Prepare Examples 1 through 4 and Comparative Example Aby weighing and adding all raw materials of the polyol mixture (polyol, catalyst and surfactant) for the Example (seen in Table 2) to a Teflon® bottle. Mix the content of the Teflon® bottle at 3000 rotations per minute (rpm) for 2 minutes at room temperature (23 °C) and pressure (101 KPa) with a high speed mixer (INVT SFJ-400, Moderner, China). After mixing remove the lid of the Teflon® bottle and allow the contents of the Teflon® bottle to equilibrate (release of air bubbles from the polyol mixture) at room temperature and pressure for one to two hours.

Add the polyol mixture from the Teflon® bottle to a high pressure reactor and place in a high pressure autoclave that is located in a temperature controlled water bath. Provide a sufficient headspace volume above the polyol mixture to allow for foam expansion. Seal the high pressure autoclave and purge the atmosphere with carbon dioxide ($CO_2$) to remove air and water ($H_2O$) from the high pressure autoclave. Heat the contents of the high pressure reactor using the temperature controlled water bath set to 40 °C. Introduce carbon dioxide into the high pressure autoclave to increase the pressure inside the high pressure reactor to 7 mega Pascals (MPa). Maintain the pressure and the temperature inside the high pressure reactor at 7 MPa and 40 °C for 30minutes to facilitate $CO_2$ saturation of the polyol mixture. As discussed above, this first $CO_2$ saturation step helps to build up the initial $CO_2$ concentration and slow down (or decrease) the reaction rate of polyol/isocyanate, so that in following steps, there would be enough time for more $CO_2$ dissolved into polyol phase.

After 30minutes add the isocyanate (Table 2) and stir the contents of the reactor for 1minute. Introduce carbon dioxide into the high pressure autoclave to increase the pressure inside the high pressure reactor to 10 MPa. Allow the contents of the high pressure reactor to react for the reaction time indicated in Table 2according to different reactivity of formulations. After the reaction time release the pressure inside the high pressure reactor within 1 second to atmosphere pressure.

Characterization

Number average Cell Size Measurement

Fracture a foam sample utilizing liquid nitrogen. Sputter coat the fractured face of the foam sample with iridium. Use a scanning Electron Microscopy (SEM) to obtain images at different working distances. Obtain the number average cell size through analysis of the SEM images by using Image-Pro Plus software.

Mass Density Measurement

Measure mass density of foam samples according to EN ISO 845 or ASTM D792-00, the latter involving weighing polymer foam in water using a sinker.

Crosslink Density Measurement

$$\text{Crosslink Density}=1000/Mc$$

$$Mc = \frac{Wpol + Wiso}{\frac{Wpol(Fpol-2)}{Epol \times Fpol} + \frac{Wiso,stoich(Fiso-2)}{Eiso \times Fiso} + \frac{Wiso,exc(Fiso-1)}{Eiso(Fiso+1)}}$$

*Wpol* is the weight of the polyol;*Wiso,stoich* is the weight of the stoichiometric amount of isocyanate in grams; *Wiso,exc* is the weight of the isocyanate exceeding the stoichiometric amount; *F* is the numerical average functionality of the components; and E is the equivalent weight of the components.Mcis the molecular weight between crosslink.

Open Cell Analysis

Open cell percentage was measured with the Micromeritics Accupyc II 1340 based on ASTM D2856.

Discussion of Examples 1 through 4 and Comparative Example A

Table 2 provides the formulations and measurements of Examples 1 through 4 and Comparative Example A for the present disclosure. Examples 1 through 3 are based on commercially available formulations (without water) and have a cross-link density of 2.97. The smallest cell size is Example 2 which is de-pressured at 9 min, and its foam cell size is around 40 micron. When the de-pressure time was increased to 30 min., the sample becomes solid in the autoclave and did not foam (Comparative Example A).

Example 4has a cross link density values less than those of Examples 1 through 3. This adjustment in the cross-link density is believed to create a smaller number average cell size for the foam as compared to Examples 1 through 3. The cell size of Example 4 with cross-link density 1.77 is reduced significantly, in the range of 5 to 8 micron.

$CO_2$ Solubility in Polyol

The present disclosure uses $CO_2$ as a blowing agent. As such, the desire is to use polyols with a high $CO_2$ solubility (the higher the concentration of $CO_2$ in reactants, the more nucleation sites and gas resource will be in the bubble nucleation and growth process). The solubility of $CO_2$ in different polyols are determined by magnetic suspension balance (MSB) (see Sato etal., Solubilities and diffusion coefficients of carbon dioxide in poly(vinyl acetate) and polystyrene. The Journal of Supercritical Fluids. 2001;19(2):187-198; Lei etal. , Solubility, swelling degree and crystallinity of carbon dioxide-polypropylene system. The Journal of Supercritical Fluids. 2007;40(3):452-461; Sato etal., Solubility and Diffusion Coefficient of Carbon Dioxide in Biodegradable Polymers. Industrial & Engineering Chemistry Research. 2000;39(12):4813-4819; and Sato etal., Solubility of carbon dioxide in PPO and PPO/PS blends. Fluid Phase Equilibria. 2002; 194-197:847-858).

Table 3 lists the solubility of $CO_2$ in different polyols and isocyanate determined from the MSB experiments at 40 °C. The solubility of $CO_2$ increases with increasing saturation pressure, and the solubility range at 6 MPa lies between 14 wt. % to 34 wt. %, which means the polyol structure (like chemical backbone, hydroxyl number, molecular weight or functionality) has a strong impact on the $CO_2$ solubility.

Table 3 - Solubility of $CO_2$ in Polyols and Isocyanate at Different $CO_2$ Pressure.

| | $CO_2$ saturation pressure (wt. %) | | |
|---|---|---|---|
| | At 2 MPa | At 4 MPa | At 6 MPa |
| SD301 | 9.60 | 26.45 | 34.20 |
| SPECFLEX NC 700 | 6.22 | 14.69 | 26.48 |
| RN482 | 3.29 | 8.60 | 18.47 |
| PS3152 | 2.95 | 7.37 | 14.08 |
| T5903 | 3.54 | 10.51 | 19.47 |
| PAPI 27 | 4.13 | 10.15 | 19.32 |
| RH360 | 5.32 | 16.24 | 31.97 |
| CP450 | 5.64 | 13.83 | 26.78 |
| CP260 | 3.99 | 9.87 | 18.13 |

Crosslink Density

The functionality, equivalent weight, and type of hydroxyl group of the polyol helps to determine both the polyol reactivity and the crosslink structure obtained during the reaction. Screening experiments aiming at determining the appropriate crosslink density for the process of the present disclosure are shown in Table 4.

Prepare Examples 5 through 9 by weighing and adding all raw materials of the polyol mixture (polyol, catalyst and surfactant) for the Example (Table 4) to a Teflon® bottle. Process as discussed above for Examples 1 through 4 and Comparative Example A, with the following changes. Heat the contents of the high pressure reactor using the temperature controlled water bath set to 40 °C. Introduce carbon dioxide into the high pressure autoclave to increase the pressure inside the high pressure reactor to 7 MPa. Maintain the pressure and the temperature inside the high pressure reactor at 7 MPa and 40 °C for 30 minutes to facilitate $CO_2$ saturation of the polyol mixture. After 30 minutes add the isocyanate (Table 4) and stir the contents of the reactor for 1 minute. Introduce carbon dioxide into the high pressure autoclave to increase the pressure inside the high pressure reactor to 10 MPa. Allow the contents of the high pressure reactor to react for the reaction time indicated in Table 4 according to different reactivity of formulations. After the reaction time release the pressure inside the high pressure reactor at a rate of 350 MPa/sec. to atmosphere pressure.

Table 4

| Components in parts by weight | | Example 5 | Example 6 | Example 7 | Example 8 | Example 9 |
|---|---|---|---|---|---|---|
| Polyol, | SD301 | 66.6 | 47.57 | 47.55 | 9.52 | 14.28 |
| Polyol | CP260 | 28.54 | 47.58 | 38.0 | 85.63 | 47.57 |
| Polyol | T5903 | 0 | 0 | 9.5 | 0 | 33.3 |
| Surfactant | AK8850 | 1.9 | 1.9 | 2.0 | 1.9 | 1.9 |
| Catalyst | PC-41 | 0.57 | 0.57 | 0.57 | 0.57 | 0.57 |
| Catalyst | PC-5 | 0.48 | 0.48 | 0.48 | 0.48 | 0.48 |
| Catalyst | PC-8 | 1.9 | 1.9 | 1.9 | 1.9 | 1.9 |
| Isocyanate Index = 1.15 | Papi-27 | 80.8 | 106.6 | 101 | 158.2 | 132.4 |
| Mw per crosslink | | 566 | 488 | 486 | 409 | 408 |
| Crosslink Density (1000/Dalton) | | 1.77 | 2.05 | 2.06 | 2.44 | 2.45 |
| Reaction Time at Depressurization | | 10 min 10 sec | 10 min | 10 min | 10 min | 10 min |
| | | - | - | - | - | - |
| Number average Cell size (μm) | | 8 | 33 | 7.5 | 44 | 38 |
| Porosity | | 77% | 83% | 85% | 63% | 69% |

Compared with conventional PU foaming process, one stage (with no second stage pressurization process) supercritical $CO_2$ foaming process can reduce the cell size, but the porosity is lower than80%. However, by utilizing the two stage process of the present disclosure, microcellular PU foams with cell size of approximately 5 microns and porosity of no less than 85% are successfully produced (e.g., Example 11, below).

Processing conditions & examples

For each of Comparative Examples B through D and Examples 12 and 13 prepare Example 9, as discussed above, with the following changes. Heat the contents of the high pressure reactor using the temperature controlled water bath set to 40 °C. Introduce carbon dioxide into the high pressure autoclave to increase the pressure inside the high pressure reactor as provided in Table 5. Maintain the temperature and the pressure inside the high pressure reactor at 40 °C (1$^{st}$ predetermined pressure) provided in Table 5. Add the isocyanate and stir the contents of the reactor for 1 minute. Maintain the reaction pressure for the second predetermined time provided in Table 5. Introduce carbon dioxide into the high pressure autoclave to achieve the Saturation pressure (2$^{nd}$ predetermined pressure) provided in Table 5. Allow the contents of the high pressure reactor to react for the overall reaction time indicated for Example 9 in Table 4. After the reaction time release the pressure inside the high pressure reactor as provided in Table 5. A second predetermined time of zero means either the pressure is kept constant or the pressure is increased to saturation pressure immediately after the mixing.

Table 5

| | Temperature (°C) | Reaction Pressure (1$^{st}$ predetermine d pressure) (MPa) | Reaction time (2$^{nd}$ predetermine d time) (s) | Saturation pressure (2$^{nd}$ predetermine d pressure (MPa) | Depressuriza tion rate (MPa/s) |
|---|---|---|---|---|---|
| Comparative Example B | 40 | 7 | 0 | 7 | 90 |
| Comparative Example C | 40 | 15 | 0 | 15 | 300 |
| Example D | 40 | 7 | 0 | 10 | 200 |
| Example 10 | 40 | 7 | 30 | 10 | 260 |

(continued)

| | Temperature (°C) | Reaction Pressure (1st predetermine d pressure) (MPa) | Reaction time (2nd predetermine d time) (s) | Saturation pressure (2nd predetermine d pressure (MPa) | Depressuriza tion rate (MPa/s) |
|---|---|---|---|---|---|
| Example 11 | 40 | 7 | 30 | 15 | 350 |

*Results*

Comparative Example B: With the raw materials of Example 9 listed in Table 4, following the processing parameters as listed in Table 5, i.e. pre-saturated with 7 MPa $CO_2$ for 1hr, mixing with isocyanate for 90 s, keep the pressure constant at 7 MPa and release the pressure at a depressurization rate of 90 MPa/s, PU foams with a number average cell size of 60 micron, and porosity of 75% are obtained.

Comparative Example C: With the raw materials of Example 9 listed in Table 4, following the processing parameters as listed in Table 5, i.e. pre-saturated with 15 MPa $CO_2$ for 1hr, mixing with isocyanate for 90 s, keep the pressure constant at 15 MPa and release the pressure at a depressurization rate of 300 MPa/s, PU foams with a number average cell size of 40 micron, and porosity of 63% are obtained.

Example D: With the raw materials of Example 9 listed in Table 4, following the processing parameters as listed in Table 5, i.e. pre-saturated with 7 MPa $CO_2$ for 1hr, mixing with isocyanate for 90 s, immediately increase the pressure to 10 MPa and release the pressure at a depressurization rate of 200 MPa/s, bimodal cell size distribution PU foams with a number average cell size of 70 micron and porosity of 85% are obtained.

Example 10: With the raw materials of Example 9 listed in Table 4, following the processing parameters as listed in Table 5, i.e. pre-saturated with 7 MPa $CO_2$ for 1hr, mixing with isocyanate for 90 s, and then reaction at 7 MPa for 30 s, followed by increase the pressure to 10 MPa and release the pressure at a depressurization rate of 260 MPa/s, bimodal cell size distribution PU foams with a number average cell size of 10 $\mu$m and porosity of 87% are obtained.

Example 11: With the raw materials of Example 9 listed in Table 4, following the processing parameters as listed in Table 5, i.e. pre-saturated with 7 MPa $CO_2$ for 1hr, mixing with isocyanate for 90 s, and then reaction at 7 MPa for 30 s, followed by increase the pressure to 15 MPa and release the pressure at a depressurization rate of 350 MPa/s, uniform cell size distribution PU foams with a number average cell size of 4.6$\mu$m, and porosity of 90.4% are obtained.

Conclusion

From the experiments results delivered from Comparative Examples B and C, Example D and Examples D, 10 and 11 of Table 5, it is shown that compared with one-stage foaming process the two-stage $CO_2$ pressurization process of the present disclosure produces rigid PU foams with smaller cell size and high porosity. While higher saturation pressure, as well as higher depressurization are also benefit for the generation of microcellular PU foam with porosity as high as at least 90 %.

*Open cell development*

Use a cell opening surfactant composition to allow cell opening to occur at the last stage of bubble growth process. This leads to a high open cell percentage and high porosity of the PU foam having a cell size of no greater than 10$\mu$m. The cell opening surfactant composition is a specific ratio of AK8850 and L6164. AK8850 and L6164 are both silicone surfactants and fit PU foaming in super critical carbon dioxide system. AK8850 can stabilize the foam in bubble growth process and L6164 can open cells at the end of the bubble growth process. When the two surfactants added with a specific content ratio, a PU foam with open cell percentage higher than 95%, porosity higher than 86%, and cell size no greater than 10 $\mu$m is obtained. The general structure of L6164 is as follows:

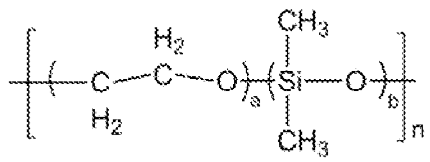

Raw materials and formulation information:

Table 7: Formulation information

| | Example 12(parts by weight, pbw) | Comparative Example E (pbw) | Comparative Example F (pbw) | Example 13 (pbw) | Example 14 (pbw) | Example 15 (pbw) |
|---|---|---|---|---|---|---|
| SD301 | 47.55 | 47.07 | 47.07 | 47.07 | 44.15 | 43.67 |
| CP260 | 38 | 37.61 | 37.61 | 37.61 | 35.29 | 34.90 |
| T5903 | 9.5 | 9.4 | 9.4 | 9.4 | 8.82 | 8.72 |
| PC-41 | 0.57 | 0.56 | 0.56 | 0.56 | 0.53 | 0.52 |
| PC-5 | 0.48 | 0.48 | 0.48 | 0.48 | 0.45 | 0.45 |
| PC-8 | 1.9 | 1.88 | 1.88 | 1.88 | 1.76 | 1.74 |
| R-501 | 0 | 1 | 0 | 0 | 0 | 0 |
| AK9903 | 0 | 0 | 1 | 0 | 0 | 0 |
| AK8850 | 2 | 2 | 2 | 2 | 5 | 3 |
| L6164 | 0 | 0 | 0 | 1 | 4 | 7 |
| Papi-135C | 101 | 101 | 101 | 101 | 101 | 101 |

Conduct the same two stage foaming process, described above, for Comparative Examples E and F and Examples 12-15.

1. Sample loading: Add polyol mixture into the high pressure autoclave. Seal the autoclave and purge with $CO_2$ three times to remove the air and moisture.

2. Set the reaction and pre-saturation temperature at40°C, increase the $CO_2$ pressure to 7 MPa and saturation for 1hr.

3. Pump stoichiometric Papi-135C (according to Table 6) into the autoclave and mixing for 90 s.

4. Leave the mixture of polyol/isocyanate reacted for 30 s.

5. Increase the pressure to 15 MPa and maintain the pressure constant for 9 min.

6. Release the pressure at a depressurization rate of 350 MPa/s

7. The obtained PU foam will be used for characterization.

*Results*

1. Example 12: With the raw materials as listed in Table 7, adding only surfactant AK8850, PU foams with a number average cell size of 4.6μm, open cell percentage of 29.1%, and porosity of 90.4% are obtained.
2. Comparative Example E: With the raw materials as listed in Table 7, adding the complex of AK8850 and cell opener R-501, PU foams with a number average cell size of 52.8μm, open cell percentage of 84% and porosity of 63% are obtained.

3. Comparative Example F: With the raw materials as listed in Table 7, adding the complex of AK8850 and cell opener AK9903, bimodal cell size distribution PU foams with small cell size of 5 μm, big cell size of 25 μm, open cell percentage of 55.8% and porosity of 81.4% are obtained.
4. Example 13: With the raw materials as listed in Table 7, adding the complex of AK8850 and L6164 with content ratio of 2:1, PU foams with a number average cell size of 9.7 μm, open cell percentage of 78.1% and porosity of 82.7% are obtained.
5. Example 14: With the raw materials as listed in Table 7, adding the complex of AK8850 and L6164 with content ratio of 5:4, uniform cell size distribution PU foams with a number average cell size of 6.1 μm, open cell percentage of 96.4% and porosity of 86% are obtained.
6. Example 15: With the raw materials as listed in Table 7, adding the complex of AK8850 and L6164 with content ratio of 3:7, uniform cell size distribution PU foams with a number average cell size of 6.8 μm, open cell percentage of 92.3% and porosity of 85.8% are obtained.

When using conventional cell openers in super critical $CO_2$ system, the resultant foams show very big cell size, very low open cell percentage or very low porosity. When using the complex of AK8850 and L6164 with a specific content ratio (especially of 5:4), uniform cell size distribution PU foams with small cell size, high open cell percentage and high porosity are obtained.

## Claims

**1.** A method for preparing a rigid polyurethane foam, comprising:

using carbon dioxide to provide a pressure at a first predetermined value on a polyol mixture that includes a polyol, a catalyst and a surfactant;
maintaining the pressure at the first predetermined value for a first predetermined time;
mixing an isocyanate with the polyol mixture to form a polyurethane reaction mixture;
optionally maintaining the pressure on the polyurethane reaction mixture at the first predetermined value for a second predetermined time;
increasing the pressure on the polyurethane reaction mixture from the first predetermined value to a second predetermined value greater than the first predetermined value; and
releasing the polyurethane reaction mixture at a predetermined depressurization rate from the pressure after a third predetermined time to prepare the rigid polyurethane foam, where the third predetermined time is less than 30 minutes.

**2.** The method of claim 1, where the first predetermined value is from 5 megapascal (MPa) to 10 MPa at a temperature of 40 degrees Celsius (°C) to 80 °C.

**3.** The method of claim 2, where the first predetermined time is from 30 seconds (s) to 300 s.

**4.** The method of claim 1, where the second predetermined value is from greater than 10 MPa to 15 MPa at a temperature of 31 °C to 80 °C.

**5.** The method of claim 1, where using carbon dioxide to provide the pressure at the first predetermined value on the polyol mixture includes using carbon dioxide in a supercritical state to provide the pressure at the first predetermined value on the polyol mixture.

**6.** The method of claim 1, where optionally maintaining the pressure on the polyurethane reaction mixture at the first predetermined value for the second predetermined time increases the carbon dioxide content of the polyurethane reaction mixture to a value of at least 20 weight percent based on the total weight of the polyol mixture after the first predetermined time.

**7.** The method of claim 1, where the polyol mixture has a number averaged functionality of at least 2 and an average hydroxyl value of at least 100 mg KOH/g.

**8.** The method of claim 1, where the polyol is selected from the group consisting of a polyether polyol, a polyester polyol or a combination thereof.

**9.** The method of claim 1, where the isocyanate is selected from an aliphatic isocyanate, a cycloaliphatic isocyanate, an aromatic isocyanate, a polyisocyanate prepolymer or a combination thereof.

**10.** The method of claim 1, where the predetermined depressurization rate is at least 350 MPa/s.

**11.** The method of claim 1, where mixing the isocyanate with the polyol mixture to form the polyurethane reaction mixture provides a molar ratio of isocyanate groups to hydroxyl groups of greater than 1 to 1.

**12.** The method of any one of claims 1-11, further including applying a vacuum to the rigid polyurethane foam.

**13.** A rigid polyurethane foam formed by the method of any one of claims 1-12, and having a number average cell size of no greater than 10 μm and a porosity of no less than 85 percent.

**14.** The rigid polyurethane foam of claim 13, where the rigid polyurethane foam has a crosslink density from 1.0 to 3.0 and a weight average molecular weight (Mw) per cross-link from 300 to 900.

**15.** The rigid polyurethane foam of claim 13, where the rigid polyurethane foam has an open cell volume content from 35 percent (%) to 95% based on all the cells in the rigid PU foam.

**Patentansprüche**

**1.** Ein Verfahren zum Herstellen eines Polyurethan-Hartschaums, beinhaltend:

Verwenden von Kohlenstoffdioxid, um einen Druck mit einem ersten vorbestimmten Wert auf eine Polyolmischung, die ein Polyol, einen Katalysator und ein Tensid umfasst, bereitzustellen;
Aufrechterhalten des Drucks mit dem ersten vorbestimmten Wert für eine erste vorbestimmte Zeit;
Mischen eines Isocyanats mit der Polyolmischung, um eine Polyurethanreaktionsmischung zu bilden;
optional Aufrechterhalten des Drucks auf die Polyurethanreaktionsmischung mit dem ersten vorbestimmten Wert für eine zweite vorbestimmte Zeit;
Erhöhen des Drucks auf die Polyurethanreaktionsmischung von dem ersten vorbestimmten Wert auf einen zweiten vorbestimmten Wert, der größer als der erste vorbestimmte Wert ist; und
Freigeben der Polyurethanreaktionsmischung mit einer vorbestimmten Druckablassrate von dem Druck nach einer dritten vorbestimmten Zeit, um den Polyurethan-Hartschaum herzustellen, wobei die dritte vorbestimmte Zeit weniger als 30 Minuten beträgt.

**2.** Verfahren gemäß Anspruch 1, wobei der erste vorbestimmte Wert von 5 Megapascal (MPa) bis 10 MPa bei einer Temperatur von 40 Grad Celsius (°C) bis 80 °C beträgt.

**3.** Verfahren gemäß Anspruch 2, wobei die erste vorbestimmte Zeit von 30 Sekunden (s) bis 300 s beträgt.

**4.** Verfahren gemäß Anspruch 1, wobei der zweite vorbestimmte Wert von größer als 10 MPa bis 15 MPa bei einer Temperatur von 31 °C bis 80 °C beträgt.

**5.** Verfahren gemäß Anspruch 1, wobei das Verwenden von Kohlenstoffdioxid, um den Druck mit dem ersten vorbestimmten Wert auf die Polyolmischung bereitzustellen, das Verwenden von Kohlenstoffdioxid in einem überkritischen Zustand, um den Druck mit dem ersten vorbestimmten Wert auf die Polyolmischung bereitzustellen, umfasst.

**6.** Verfahren gemäß Anspruch 1, wobei das optionale Aufrechterhalten des Drucks auf die Polyurethanreaktionsmischung mit dem ersten vorbestimmten Wert für die zweite vorbestimmte Zeit den Kohlenstoffdioxidgehalt der Polyurethanreaktionsmischung auf einen Wert von mindestens 20 Gewichtsprozent, bezogen auf das Gesamtgewicht der Polyolmischung nach der ersten vorbestimmten Zeit, erhöht.

**7.** Verfahren gemäß Anspruch 1, wobei die Polyolmischung eine zahlengemittelte Funktionalität von mindestens 2 und einen mittleren Hydroxylwert von mindestens 100 mg KOH/g aufweist.

**8.** Verfahren gemäß Anspruch 1, wobei das Polyol aus der Gruppe ausgewählt ist, die aus einem Polyetherpolyol, einem Polyesterpolyol oder einer Kombination davon besteht.

9. Verfahren gemäß Anspruch 1, wobei das Isocyanat aus einem aliphatischen Isocyanat, einem cycloaliphatischen Isocyanat, einem aromatischen Isocyanat, einem Polyisocyanatpräpolymer oder einer Kombination davon ausgewählt ist.

10. Verfahren gemäß Anspruch 1, wobei die vorbestimmte Druckablassrate mindestens 350 MPa/s beträgt.

11. Verfahren gemäß Anspruch 1, wobei das Mischen des Isocyanats mit der Polyolmischung zum Bilden der Polyurethanreaktionsmischung ein Molverhältnis von Isocyanatgruppen zu Hydroxylgruppen von mehr als 1 zu 1 bereitstellt.

12. Verfahren gemäß einem der Ansprüche 1-11, das ferner das Aufbringen eines Vakuums auf den Polyurethan-Hartschaum umfasst.

13. Ein Polyurethan-Hartschaum, der durch das Verfahren gemäß einem der Ansprüche 1-12 gebildet ist und eine zahlenmittlere Zellgröße von nicht größer als 10 $\mu$m und eine Porosität von nicht weniger als 85 Prozent aufweist.

14. Polyurethan-Hartschaum gemäß Anspruch 13, wobei der Polyurethan-Hartschaum eine Vernetzungsdichte von 1,0 bis 3,0 und ein gewichtsmittleres Molekulargewicht (Mw) pro Vernetzung von 300 bis 900 aufweist.

15. Polyurethan-Hartschaum gemäß Anspruch 13, wobei der Polyurethan-Hartschaum einen Volumengehalt an offenen Zellen von 35 Prozent (%) bis 95 %, bezogen auf alle Zellen in dem PU-Hartschaum, aufweist.

## Revendications

1. Un procédé pour la préparation d'une mousse de polyuréthane rigide, comprenant :

   l'utilisation de dioxyde de carbone afin de fournir une pression à une première valeur prédéterminée sur un mélange de polyol qui inclut un polyol, un catalyseur et un agent tensioactif ;
   le maintien de la pression à la première valeur prédéterminée pendant une première durée prédéterminée ;
   le mélange d'un isocyanate avec le mélange de polyol afin de former un mélange réactionnel de polyuréthane ;
   le maintien facultatif de la pression sur le mélange réactionnel de polyuréthane à la première valeur prédéterminée pendant une deuxième durée prédéterminée ;
   l'augmentation de la pression sur le mélange réactionnel de polyuréthane depuis la première valeur prédéterminée jusqu'à une deuxième valeur prédéterminée supérieure à la première valeur prédéterminée ; et
   le relâchement de la pression du mélange réactionnel de polyuréthane à une vitesse de dépressurisation prédéterminée après une troisième durée prédéterminée afin de préparer la mousse de polyuréthane rigide, où la troisième durée prédéterminée est inférieure à 30 minutes.

2. Le procédé de la revendication 1, où la première valeur prédéterminée va de 5 mégapascals (MPa) à 10 MPa à une température de 40 degrés Celsius (°C) à 80 °C.

3. Le procédé de la revendication 2, où la première durée prédéterminée va de 30 secondes (s) à 300 s.

4. Le procédé de la revendication 1, où la deuxième valeur prédéterminée va de plus de 10 MPa à 15 MPa à une température de 31 °C à 80 °C.

5. Le procédé de la revendication 1, où l'utilisation de dioxyde de carbone afin de fournir la pression à la première valeur prédéterminée sur le mélange de polyol inclut l'utilisation de dioxyde de carbone dans un état supercritique afin de fournir la pression à la première valeur prédéterminée sur le mélange de polyol.

6. Le procédé de la revendication 1, où le maintien facultatif de la pression sur le mélange réactionnel de polyuréthane à la première valeur prédéterminée pendant la deuxième durée prédéterminée augmente la teneur en dioxyde de carbone du mélange réactionnel de polyuréthane jusqu'à une valeur d'au moins 20 pour cent en poids rapporté au poids total du mélange de polyol après la première durée prédéterminée.

7. Le procédé de la revendication 1, où le mélange de polyol a une fonctionnalité moyennée en nombre d'au moins 2 et un indice d'hydroxyle moyen d'au moins 100 mg KOH/g.

**8.** Le procédé de la revendication 1, où le polyol est sélectionné dans le groupe constitué d'un polyol de polyéther, d'un polyol de polyester ou d'une combinaison de ceux-ci.

**9.** Le procédé de la revendication 1, où l'isocyanate est sélectionné parmi un isocyanate aliphatique, un isocyanate cycloaliphatique, un isocyanate aromatique, un prépolymère de polyisocyanate ou une combinaison de ceux-ci.

**10.** Le procédé de la revendication 1, où la vitesse de dépressurisation prédéterminé est d'au moins 350 MPa/s.

**11.** Le procédé de la revendication 1, où le mélange de l'isocyanate avec le mélange de polyol afin de former le mélange réactionnel de polyuréthane fournit un rapport molaire des groupes isocyanate aux groupes hydroxyle supérieur à 1 pour 1.

**12.** Le procédé de n'importe laquelle des revendications 1 à 11, incluant en outre l'application d'un vide à la mousse de polyuréthane rigide.

**13.** Une mousse de polyuréthane rigide formée par le procédé de n'importe laquelle des revendications 1 à 12, et ayant une taille de cellule moyenne en nombre non supérieure à 10 $\mu$m et une porosité non inférieure à 85 pour cent.

**14.** La mousse de polyuréthane rigide de la revendication 13, la mousse de polyuréthane rigide ayant une densité de réticulation allant de 1,0 à 3,0 et une masse moléculaire moyenne en poids (Mw) par réticulation allant de 300 à 900.

**15.** La mousse de polyuréthane rigide de la revendication 13, la mousse de polyuréthane rigide ayant une teneur en volume de cellules ouvertes allant de 35 pour cent (%) à 95 % rapporté à toutes les cellules dans la mousse de PU rigide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2012245243 A
- DE 102011050013


### Non-patent literature cited in the description


- Preparation of sorbitol from D- glucose hydrogenation in gas-liquid-solid three-phase flow airlift loop reactor. **WEN, JIAN-PING.** The Journal of Chemical Technology and Biotechnology. Wiley Interscience, 2004, vol. 4, 403-406
- **SATO et al.** Solubilities and diffusion coefficients of carbon dioxide in poly(vinyl acetate) and polystyrene. *The Journal of Supercritical Fluids,* 2001, vol. 19 (2), 187-198
- **LEI et al.** Solubility, swelling degree and crystallinity of carbon dioxide-polypropylene system. *The Journal of Supercritical Fluids,* 2007, vol. 40 (3), 452-461
- **SATO et al.** Solubility and Diffusion Coefficient of Carbon Dioxide in Biodegradable Polymers. *Industrial & Engineering Chemistry Research,* 2000, vol. 39 (12), 4813-4819
- **SATO et al.** Solubility of carbon dioxide in PPO and PPO/PS blends. *Fluid Phase Equilibria,* 2002, vol. 194-197, 847-858